# EUROPEAN PATENT SPECIFICATION

(11) **EP 1 752 462 B1**
(45) Date of publication and mention of the grant of the patent: **18.03.2009**
(21) Application number: 05254954.0
(22) Date of filing: 09.08.2005
(51) Int. Cl.: C07F 7/08

(54) **Siloxy substituted metallocene catalysts**
Siloxy substituierte Metallocenkatalysatoren
Catalyseurs metallocenes siloxy substitues

(43) Date of publication of application: 14.02.2007
(73) Proprietor: Borealis Technology Oy, 06101 Porvoo (FI)
(72) Inventor: Andell, Ove, Biskopsgatan 8 20500 Abo (FI); Penninkangas, Antti, Biskopsgatan 8 20500 Abo (FI); Ge, Shaozhong, Biskopsgatan 8 20500 Abo (FI); Paavola, Sari, Biskopsgatan 8 20500 Abo (FI)
(74) Representative: Campbell, Neil Boyd

(56) References cited:
- EP-A- 0 545 304
- WO-A-97/28170
- WO-A-03/010208
- LARSON ET AL.: "The stereochemistry of the beta-elimination of beta-Trimethylsiloxy Organoboranes" JOURNAL OF ORGANOMETALLIC CHEMISTRY, no. 102, 1975, pages 123-127, XP002360044
- MUSKER W. K, LARSON, G. L.: "The Stereochemistry of beta Elimination Reactions in Organosilanes" JACS, vol. 91, no. 2, 1969, pages 514-514, XP002360045
- SIU, T. ET AL.: "Total Synthesis of Lactonamycinone" ANGEW. CHEM. INT. ED., vol. 42, no. 45, 18 November 2003 (2003-11-18), pages 5629-5634, XP002360046
- DATABASE CA [Online] CHEMICAL ABSTRACTS SERVICE, COLUMBUS, OHIO, US; VORONKOV, M. G. ET AL: "Unusual decomposition of 1,2-bis(trimethylsiloxy)benzene in the presence of gallium triiodide" XP002360051 retrieved from STN Database accession no. 2000:379905 & RUSSIAN JOURNAL OF GENERAL CHEMISTRY (TRANSLATION OF ZHURNAL OBSHCHEI KHIMII) , 69(12), 1969-1970 CODEN: RJGCEK; ISSN: 1070-3632, 1999,
- DATABASE CA [Online] CHEMICAL ABSTRACTS SERVICE, COLUMBUS, OHIO, US; MARCUS, LOTHAR ET AL: "New N,Si,O,C-heterophanes - Synthesis of a 16-membered macrocycle" XP002360052 retrieved from STN Database accession no. 1995:525762 & ZEITSCHRIFT FUER NATURFORSCHUNG, B: CHEMICAL SCIENCES , 50(4), 687-90 CODEN: ZNBSEN; ISSN: 0932-0776, 1995,
- DATABASE CA [Online] CHEMICAL ABSTRACTS SERVICE, COLUMBUS, OHIO, US; ANDO, WATARU ET AL: "Reaction of dimethylsilylene with .alpha.-diketones. Formation and reaction of 1,3-dioxa-2-silacyclopent-4-enes" XP002360053 retrieved from STN Database accession no. 1980:58856 & JOURNAL OF THE CHEMICAL SOCIETY, CHEMICAL COMMUNICATIONS , (15), 655-6 CODEN: JCCCAT; ISSN: 0022-4936, 1979,

## Description

This invention relates to new siloxy substituted catalysts for olefin polymerisation and to a process for the manufacture of siloxy substituted compounds. In particular, the invention concerns catalysts comprising cyclic siloxy substituents.

In olefin polymerization, it has long been known to use as a catalyst system the combination of a metallocene procatalyst and a co-catalyst, e.g. an aluminoxane cocatalyst.

More recently, chemists have appreciated the potential benefits in employing siloxy substitution on metallocenes. For example, WO01/53362 describes various monosubstituted siloxy derivatives which have surprising activity when used in combination with non MAO cocatalysts.

WO03/000744 describes indenyl metallocenes substituted in the 4,5,6 or 7 position by siloxy substituents. Indenyl metallocenes monosubstituted in the 1,2 or 3 positions are described in WO97/28170. WO03/010208 describes metallocenes monosubstituted by siloxy groups containing an olefinic residue.

The siloxy substituted catalysts prepared to date have a tendency to give rise to long chain branching in the polymer product. Whilst this might be beneficial for a number of end applications (e.g. films with improved optical properties), the chemist is also striving for polymers free of such branching since polymers free of long chain branching tend to possess improved mechanical properties. He is thus searching for new metallocenes which will give rise to polymers of desirable properties, e.g. high molecular weight, high comonomer incorporation, but-without high levels of long chain branching. The chemist also strives for high activity catalysts and catalysts which exhibit advantageous comonomer incorporation properties.

We have now surprisingly found that metallocenes in which the metal is complexed by a cyclic-siloxy substituted cyclopentadienyl or indenyl ligand have surprisingly high activity, give rise to polymers with high MW and exhibit high comonomer incorporation whilst not giving high levels of long chain branching.

The inventors have also devised a new process of the preparation of cyclic siloxy substituted ligands involving a tris(pentafluorophenyl)borane catalysed reduction of aromatic ethers in the presence of a hydrosilating agent. The reaction of an aromatic ether (such as methoxybenzene) with B(C₆F₅)₃ and HSiEt₃ to form triethylsilyloxybenzene is not new and has been described in Tett Letts 40 (1999) 8919-8922 but never before has this reaction been employed in the formation of cyclic siloxy derivatives, i.e. compounds in which the siloxy substituent forms a ring with the ring to the atoms to which it attaches, with a view to employment in olefin polymerisation.

Finally, the inventors have found a simple way of converting a typical metallocene ligand starting material (indanone) into a ligand for metallocene catalysis. This involves conversion of the ketone to a siloxy group and elimination of the siloxy group to form a double bond, i.e. an indene species. This can be achieved using tris(pentafluorophenyl)boron catalysed hydrosilation of aromatic ketones (e.g. as described in J Am Chem Soc 1996, 118, 9440-9441) and subsequent elimination in the presence of tris(pentafluorophenyl)boron.

Thus, viewed from one aspect the invention provides a compound of formula (I) or (II) 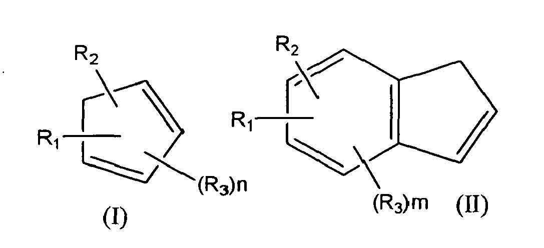 wherein R¹ and R² are bound to adjacent carbon atoms and are taken together to form a group -X-SiR'₂-Y-SiR'₂-X- or-X-SiR'₂-X-;
each R', which may be the same or different, is a C₁₋₂₀-hydrocarbyl group;
each X, which may be the same or different, is O, S, NH, PH;
Y is a group X or a bond;
each R₃, which may be the same or different, is a ring substituent or two R₃ groups taken together can form a further optionally R₃ substituted ring (e.g. to form an optionally substituted fluorenyl structure);
m is 0 to 5; and
n is 0 to 3.

For the purposes of clarity, it is stressed that the R₁₋₃ substituents can be present on any ring in formula (II) although it will of course be essential for R₁ and R₂ to be present on the same ring to ensure that they are adjacent.

Viewed from another aspect the invention provides a metallocene procatalyst compound of formula (III)

Cp^{a}(Cp^{b})ₚMZ₃₋ₚ (III)

wherein Cp^{a} is a compound of formula (I') or (II') 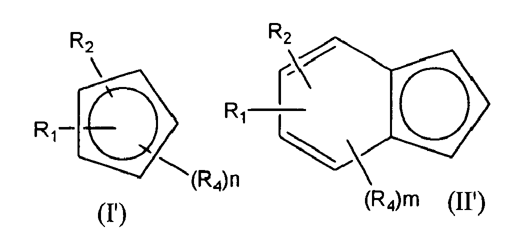 wherein R₁, R₂, n and m are as hereinbefore defined and R₄ is a group R₃ as hereinbefore defined or a R₄ group, together with a substituent on ring Cp^{b} can be taken together to form a bridge between the Cp^{a} and Cp^{b} ligands;
Cp^{b} is a group Cp^{a} or a cyclopentadienyl containing ligand (e.g. cyclopentadienyl or indenyl ligand);
M is a group 3 to 7 transition metal;
Z is a sigma ligand; and
p is 0 or 1.

Viewed from a further aspect the invention provides an olefin polymerisation catalyst system comprising (i) a metallocene procatalyst as hereinbefore described and (ii) a co-catalyst.

Viewed from a still further aspect the invention provides a process for olefin polymerisation comprising polymerising an olefin in the presence of olefin polymerisation catalyst system as hereinbefore described.

Viewed from a further aspect the invention provides the use of an olefin polymerisation catalyst system as hereinbefore defined in olefin polymerization, especially ethylene or propylene, more especially ethylene, polymerisation or copolymerisation.

Viewed from a yet further aspect the invention provides an olefin polymer produced by a polymerisation catalysed by an olefin polymerisation catalyst system as hereinbefore described.

Preferred embodiments for compounds of formula (I) and (II) apply equally to their closely related deprotonated ligands of formula (I') and (II').

In compounds of formula (I) and (II), each X is preferably O or S, especially O. Preferably, both X atoms are oxygen.

Y may be a bond or a group X. When Y is X, it will preferably represent oxygen. Preferred structures for R₁ and R₂ (often referred to herein as the cyclic siloxy group) are thus -O-SiR'₂-O-, -O-SiR'₂-SiR'₂-O- or -O-SiR'₂-O-SiR'₂-O-.

Compounds of formula (II) are preferred to those of formula (I).

In formula (II), the cyclic siloxy group is preferably present on the 6 membered ring of the indene structure either alpha, beta to the bridgehead carbon atoms or beta, gamma thereto, preferably beta, gamma thereto. Typically therefore, the indene will be deemed 5,6-substituted by the cyclic siloxy ring structure.

Each R', which may be the same or different, is preferably a C₁₋₁₆ hydrocarbyl group, preferably a C₁₋₁₂ hydrocarbyl group, e.g. a C₁₋₈ alkyl or C₂₋₈ alkenyl group. Most favoured R' groups are C₁₋₄ alkyls, e.g. methyl or ethyl. All R' groups are preferably identical.

Both n and m are preferably 0, 1 or 2, especially 0 or 1, e.g. 0.

If present R₃ is preferably a group R', with preferences as discussed above, or a siloxy structure, e.g. OSiR'₃, wherein R' has the definition above. In both situations R' is especially preferably methyl. It is also possible for two R₃ groups on adjacent carbon atoms to be taken together to form a further ring, e.g. a five or six membered ring which may be saturated or unsaturated. Most preferably a multiring aromatic system is formed. Thus, two R₃ groups present on the five membered ring of formula (II) can be taken together to create a further aromatic 6 -membered ring, i.e. a fluorenyl ring system is formed. Such further rings may carry no substituents, single R₃ substituents or multiple R₃ substituents.

Cp^{a} is preferably a ligand of formula (II') and therefore has preferred substituents as discussed for formula (II). Cp^{b} may be any suitable eta-5 ligand such as cyclopentadienyl, substituted cyclopentadienyl (e.g. R₃ substituted), indenyl, or substituted indenyl (e.g. R₃ substituted). Most preferably however, Cp^{b} is a group Cp^{a}. In this embodiment, it is especially preferred if both Cp groups are identical, e.g. two identical ligands of formula (II').

The group R₄ can represent a group R₃ or together with another suitable substituent on another ring (e.g. another R₄ substituent) can form a bridge between the two ligands as is well known in the art, e.g. a 1 to 3 atom bridge such as an ethylene or dimethylsilyl bridge. Various bridges have been proposed in the art and will be known to the skilled chemist. Typically, bridges are formed from carbon and/or silicon atoms, there being one or two atoms forming the link between ligands.

If present, the bridge between ligands should preferably be between the 1-positions on the rings.

The metal M is preferably a group 4 to 6 transition metal, e.g. a metal selected from Ti, Zr, Hf, V, Nb, Ta, Cr, Mo and W. However the metal is preferably Cr, Ti, Zr or Hf, particularly Ti, Zr or Hf.

The metal in the procatalyst of the invention may be coordinated by sigma ligands (Z) as is known in the art, e.g. coordinated by 2 or 3 sigma ligands. Such ligands may be hydrogen atoms, C₁₋₁₂ hydrocarbyl groups (such as C₁₋₁₂ alkyl, C₂₋₁₂ alkenyl or C₂₋₁₂ alkynyl groups optionally substituted by fluorine and/or aryl (e.g. phenyl) groups), by silane groups (e.g. triC₁₋₁₆-alkylsilyl), by halogen atoms (e.g. chlorine), by amine (e.g. NMe₂) or by other sigma- ligands known for use in metallocene (pro)catalysts.

Preferably, the sigma ligand is a halogen (especially chlorine), amino (especially dimethylamino), C₁₋₁₂ alkyl (especially methyl), benzyl or trialkylsilyl (especially trimethylsilyl) ligand. Moreover, it is preferred if all sigma ligands present are identical.

The metallocene procatalyst of the invention may comprise a ligand of formula (I') or (II') and three sigma ligands where p is 0. Alternatively, the procatalyst may comprise two eta-5 ligands and two sigma ligands where p is 1.

Thus, especially preferred ligands Cp^{a} or Cp^{b} for use in the procatalysts of formula (III) are of formula (IV) 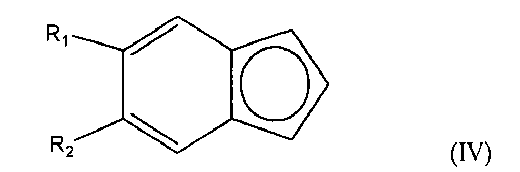 wherein R₁ and R₂ are as hereinbefore defined.

The compounds of formula (I) and (II) and hence ligands used according to the invention have proven challenging to synthesize although the inventors have been able to devise a strategy for their preparation as described below. The processes for the preparation of the compounds described below are therefore inventive and form a further aspect of the invention.

Cyclic siloxy substituted cyclopentadiene/ indene compounds can be prepared from a corresponding bishydrocarbyloxy substituted cyclopentadiene/indene/indane compound in an aprotic solvent, e.g. toluene, using a hydrosilating agent in the presence of a Lewis Acid, especially a boron containing Lewis acid. Ideally, the Lewis acid should be a compound of formula B(ArF)₃ wherein ArF is a fluorinated aromatic moiety such as perfluorophenyl. B takes its normal chemical meaning of boron.

Thus, viewed from a further aspect the invention provides a process for the preparation of a compound of formula (I) or (II) as hereinbefore described comprising reacting a compound of formula (I") or (II") 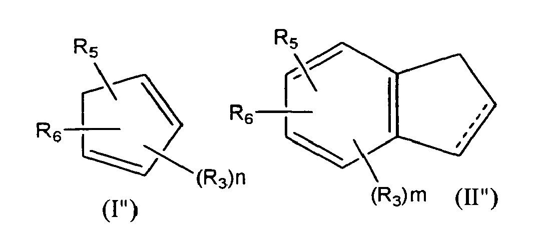 wherein R₃, m and n are as hereinbefore defined;
R₅and R₆ are present on adjacent carbon atoms and represent hydrocarbyloxy groups; and the dotted line represents an optionally present double bond;
with a compound R'₂SiH₂ or HR'₂SiSiR'₂H wherein R' is as hereinbefore defined;
in the presence of a Lewis Acid, preferably a boron containing Lewis Acid, especially a compound of formula B(ArF)₃ wherein ArF represents a fluorine carrying aromatic group.

R₅ and R₆ are preferably C₁₋₁₆-hydrocarbyl, more preferably C₁₋₁₀-alkoxy, especially methoxy or ethoxy. They are preferably present beta, gamma to the bridgehead carbon atoms in formula (II").

Lewis acids of use in this reaction include those of formula BJ₃, AlJ₃, FeJ₃, GaJ₃, or SbJ₅ where J represents an inorganic radical such as halide or an alkyl group such as methyl. Stronger Lewis acids are preferred such as those BJ₃ or AlCl₃. Especially preferably, the Lewis acid contains boron, e.g. BF₃. More preferably, the Lewis acid contains a heavily electron withdrawing ligand such as a ArF ligand wherein ArF represents a fluorine carrying aromatic group. Thus, the Lewis acid may be of formula B(ArF)_{3-q}J_{q} where q is 1 or 2. Most especially, the Lewis acid is a compound of formula B(ArF)₃.

The ArF groups in the B(ArF)₃ compound can take a variety of forms. Thus, the ArF may comprise a phenyl ring carrying one or more -CF₃ substituents. Two ArF groups could be taken together to form a multiring aromatic system in which the B forms part of a ring, said ring system optionally comprising further boron atoms. One ArF group could be a phenyl based group with others being based on different aromatic systems, such as bis-phenyl. Suitable compounds B(ArF)₃ are shown below:

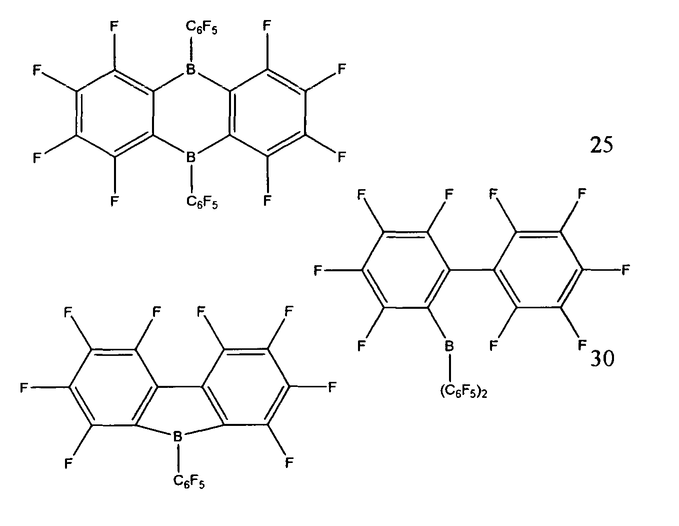

Preferably, the aromatic ring is bound directly to fluorine atoms and especially preferably, ArF groups are perfluorinated. The aromatic group is preferably phenyl, bisphenyl or naphthyl. ArF is especially C₆F₅-. The reaction preferably takes place in an aprotic solvent such as toluene or xylene.

The number of equivalents the silylating agent used is critical to determine the nature of the cyclic siloxy group formed. It will be normal to use essentially one equivalent of the silylating agent relative to the compound of formula (I") or (II"). When one equivalent of the silylating agent R'₂SiH₂ is employed the resulting compound will have the following structure:

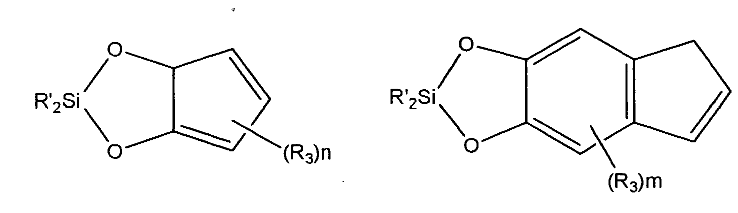

If however, two equivalents of the silylating agent R'₂SiH₂ are used, two SiR'₂H groups will be formed, one on each hydrocarbyloxy containing centre. When such groups are hydrolysed, e.g. in water, a cyclic siloxy group is then formed. This is depicted below (for indene systems).

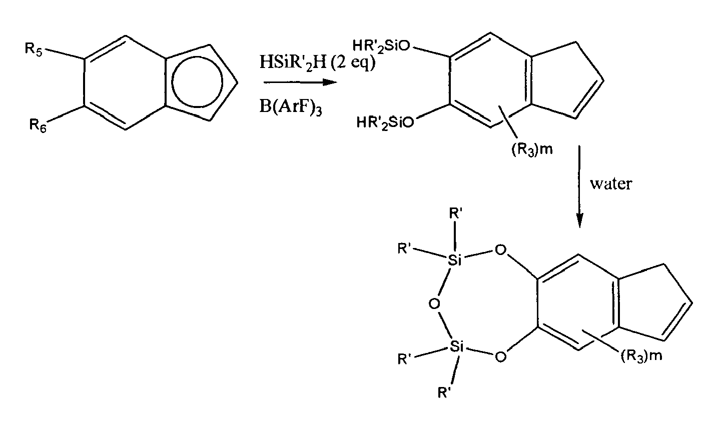

Thus viewed from a further aspect the invention provides a process for the preparation of a compound of formula (I) or (II) comprising reacting a compound of formula (I") or (II") 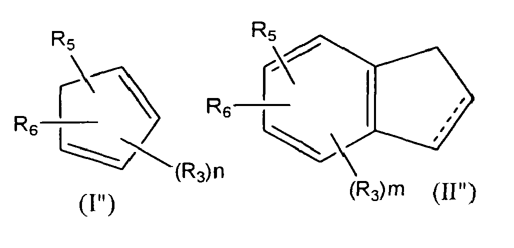 where substituents have their previously ascribed meanings
with two equivalents of a compound R'₂SiH₂ in the presence of a Lewis acid such as B(ArF)₃;
and hydrolysing the compound formed.

The double bond in the "indene" structure of formula (II") is dotted to represent its optional presence. This is because the inventors have also devised a way of introducing such a double bond using Lewis acid, e.g. B(ArF)₃ catalysis and it can be introduced after formation of the cyclic siloxy structure. The indene compounds of the invention are usually manufactured from readily available starting materials such as 1-indanone or prefunctionalised derivatives thereof. There is much literature available, for instance, of ways to introduce hydrocarbyloxy substituents onto such a structure.

At some point during metallocene synthesis it is obviously necessary to reduce the ketone functionality in the indanone and form a double bond in the five membered ring in order to allow eventual formation of an indene and hence indenyl ligand. This can be achieved in a variety of ways using well known synthetic methods, e.g. reduction to an alcohol, functionalisation to carry a good leaving group and elimination thereof to form a double bond. This is cumbersome however and too complex for industrial use.

The inventors have however found that the ketone functionality of 1-indanone can be directly reduced to a double bond in one very simple step using Lewis acid catalysis and a hydrosilating agent. In a first step, the ketone reacts with the hydrosilating agent in the presence of the Lewis acid to form a siloxy group. The siloxy group is then eliminated, again in the presence of the Lewis acid to form a double bond.

The reaction therefore involves the elimination of a siloxy group from a compound comprising a moiety of formula (V) 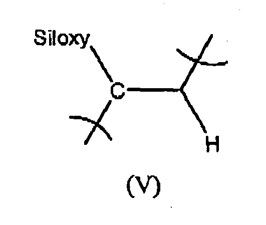 said process comprising adding a Lewis acid, preferably B(ArF)₃ to said compound in an aprotic solvent so as to form a C=C bond.

For the purposes of clarity, only the critical atoms involved in the elimination reaction are depicted in formula (V). The person skilled in the art will appreciate that the other parts of the molecule can take any form. It is preferred however if the molecule comprises electron donating groups such as alkyl groups.

The siloxy group comprises an O-Si- linkage and is preferably of formula OSiR'₃ wherein R' is as hereinbefore defined.

The Lewis acid used in this reaction will again preferably be a strong Lewis acid, e.g. a boron containing Lewis acid as described above. Especially preferably, the Lewis acid will be a compound B(ArF)₃ wherein ArF is a represents a fluorine carrying aromatic group with preferences as described above.

Preferably this reaction takes place in a cyclic structure, especially one carrying at least one electron donating group. Thus, the elimination reaction could take place in a cyclopentanone or cyclopentenone system or indane system as shown below: 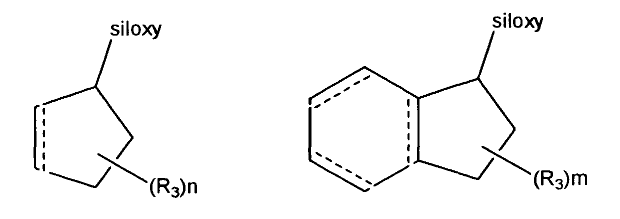 in which R₃, n and m are as hereinbefore described, the dotted lines representing optionally present double bonds. In this instance R₃ will preferably be a electron donating group such as an alkyl.

Especially preferably, the reaction takes place in a bicyclic compound where one of the rings is aromatic, e.g. an indane structure. The elimination will preferably occur in the five membered ring of such a structure, the 6-membered ring optionally carrying at least one electron donating substituent such as OSiR'₃.

Most preferably the elimination reaction takes place in an indane derivative of formula (VII) below which may be derived from an indanone compound (VI) by reaction thereof with a hydrosilating agent in the presence of a Lewis acid such as B(ArF)₃. 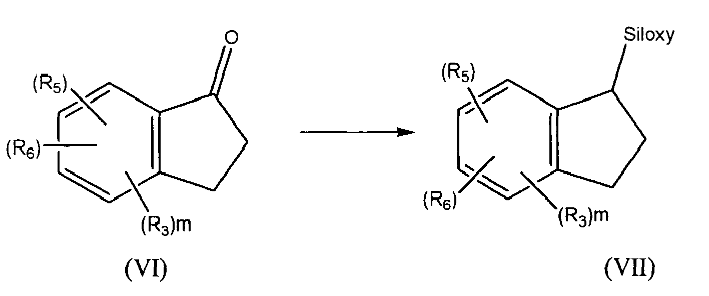 wherein R₅, R₆, R₃ are as hereinbefore defined and m represents 0 to 4. The siloxy group is preferably one of formula -OSiR'₃ wherein R' is as hereinbefore defined. The hydrosilylating agent is therefore preferably of formula HSiR'₃.

The aprotic solvent used for this reaction may be, for instance, toluene or xylene.

The person skilled in the art will realise that the reaction of compound VI with sufficient equivalents of HSiR'₃ will allow not only silylation of the ketone but also the hydrocarbyloxy substituents. Following the elimination reaction, what has been achieved in a single step is the conversion of a hydrocarbyloxy indanone compound to a siloxy indene.

Thus, the double bond in the structure of formula (II") above can be introduced after formation of the cyclic siloxy ring structure, e.g. by elimination of a siloxy ligand present at the 1-position as discussed above. A siloxy substituent could also be eliminated using mild acid hydrolysis such as with pTsOH.

The invention therefore provides a simple one step procedure for converting readily available starting materials into indene structures ready for conversion to metallocene procatalysts. Thus, viewed from a further aspect the invention covers a process as depicted below: 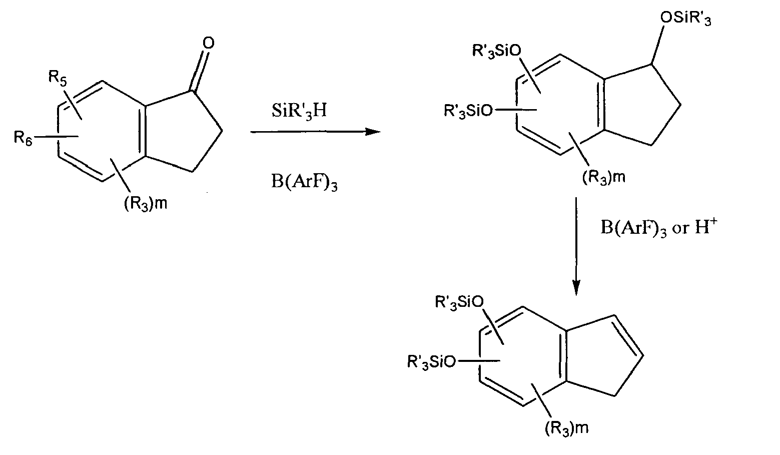 wherein the variables have meanings as previously ascribed.

Thus, a bishydrocarbyloxy substituted 1-indanone compound is reacted with hydrosilylating agent in the presence of Lewis acid such as B(ArF)₃ so as to form siloxy groups on both hydrocarbyl groups and the ketone functionality. The 5- ring siloxy substituent is then preferably eliminated using B(ArF)₃ or using hydrolysis.

A further advantageous process of the invention involves the combination of a process for preparing a cyclic siloxy carrying indene species and this siloxy elimination reaction. Thus, viewed from a further aspect the invention covers a process as depicted below: 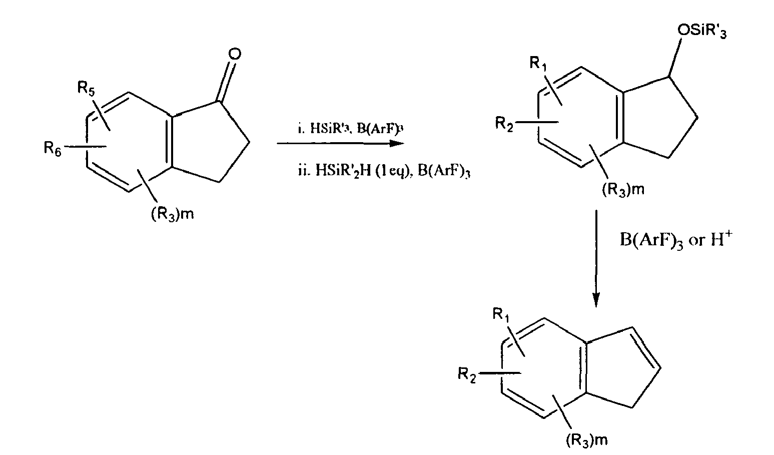 wherein the variables have meanings as previously ascribed.

It will of course be noted that where two equivalents of the HSiR'₂H reagent are employed, formation of the cyclic siloxy structure and elimination to form the double bond can occur simultaneously in step 2 in the presence of H⁺ catalysis. It will be noted by the skilled man that where the elimination reaction is occurring, a hydrogen atom must be present adjacent the siloxy group. For this reason, two R₃ substituents cannot form a further aromatic ring (e.g. a fluorenyl structure) in this situation.

Once the compounds of the invention are formed they can be made into metallocenes as is well known in the art. The ligands can be deprotonated using a strong base such as BuLi and the ligand can be metallated conventionally, e.g. by reaction with a halide of the metal M, preferably in an organic solvent, e.g. a hydrocarbon or a hydrocarbon/ether mixture. Bridged siloxy-cyclopentadienes/indenes may be constructed by reacting a cyclic siloxy-monocyclopentadiene/indene with a bridging agent (e.g. SiMe₂Cl₂).

Sigma ligands other than chlorine may be introduced by displacement of chlorine from metal chloride by reaction with appropriate nucleophilic reagent (e.g. methyl lithium) or using, instead of a metal halide, a reagent such as tetrakisdimethylamidotitanium or metal compounds with mixed chloro and dimethylamido ligands.

As mentioned above, the olefin polymerisation catalyst system of the invention comprises (i) a procatalyst and (ii) a cocatalyst compound (or the reaction product thereof). The cocatalyst may be an aluminium alkyl compound, e.g. an aluminium trialkyl (eg triethylaluminium (TEA)) or an aluminium dialkyl halide (eg diethyl aluminium chloride (DEAC)), however it is preferably an alumoxane, particularly MAO, TIBAO (tetraisobutylalumoxane) or HIBAO (hexaisobutylalumoxane). Alternatively however certain known boron cocatalysts could be used.

The metallocene procatalyst and cocatalyst may be introduced into the polymerization reactor separately or together or, more preferably they are prereacted and their reaction product is introduced into the polymerization reactor.

If desired the procatalyst, procatalyst/cocatalyst mixture or a procatalyst/cocatalyst reaction product may be used in unsupported form, i.e. metallocene and MAO can be precipitated without an actual carrier material and used as such. However the metallocene procatalyst or its reaction product with the cocatalyst is preferably introduced into the polymerization reactor in supported form, eg impregnated into a porous particulate support.

The particulate support material used is preferably an organic or inorganic material, e.g. a polymer (such as for example polyethylene, polypropylene, an ethylene-propylene copolymer, another polyolefin or polystyrene or a combination thereof). However, the support is especially preferably a metal or pseudo metal oxide such as silica, alumina or zirconia or a mixed oxide such as silica-alumina, in particular silica, alumina or silica-alumina. Particularly preferably, the support material is acidic.

Especially preferably the support is a porous material so that the metallocene may be loaded into the pores of the support, e.g. using a process analogous to those described in WO94/14856 (Mobil), WO95/12622 (Borealis) and WO96/00243 (Exxon). The particle size is not critical but is preferably in the range 5 to 200 µm, more preferably 20 to 80 µm.

Before loading, the particulate support material is preferably calcined, i.e. heat treated, preferably under a non-reactive gas such as nitrogen. This treatment is preferably at a temperature in excess of 100°C, more preferably carried out at a temperature of 200°C or higher, e.g. 200-800°C, particularly about 300°C. The calcination treatment is preferably effected for several hours, e.g. 2 to 30 hours, more preferably about 10 hours.

The support may be treated with an alkylating agent before being loaded with the metallocene. Treatment with the alkylating agent may be effected using an alkylating agent in a gas or liquid phase, e.g. in an organic solvent for the alkylating agent. The alkylating agent may be any agent capable of introducing alkyl groups, preferably C₁₋₆ alkyl groups and most especially preferably methyl groups. Such agents are well known in the field of synthetic organic chemistry. Preferably the alkylating agent is an organometallic compound, especially an organoaluminium compound (such as trimethylaluminium (TMA), dimethyl aluminium chloride, triethylaluminium) or a compound such as methyl lithium, dimethyl magnesium, triethylboron, etc.

Where an organoaluminium alkylating agent is used, this is preferably used in a quantity sufficient to provide a loading of at least 0.1 mmol Al/g carrier, especially at least 0.5 mmol Al/g, more especially at least 0.7 mmol Al/g, more preferably at least 1.4 mmol Al/g carrier, and still more preferably 2 to 3 mmol Al/g carrier. Where the surface area of the carrier is particularly high, lower aluminium loadings may be used. Thus for example particularly preferred aluminium loadings with a surface area of 300-400 m²/g carrier may range from 0.5 to 3 mmol Al/g carrier while at surface areas of 700-800 m²/g carrier the particularly pre ferred range will be lower.

Following treatment of the support material with the alkylating agent, the support is preferably removed from the treatment fluid and any excess treatment fluid is allowed to drain off.

The optionally alkylated support material is loaded with the procatalyst, preferably using a solution of the procatalyst in an organic solvent therefor, e.g. as described in the patent publications referred to above. Preferably, the volume of procatalyst solution used is from 50 to 500% of the pore volume of the carrier, more especially preferably 80 to 120%. The concentration of procatalyst compound in the solution used can vary from dilute to saturated depending on the amount of metallocene active sites that it is desired be loaded into the carrier pores.

The active metal (i.e. the metal of the procatalyst) is preferably loaded onto the support material at from 0.1 to 4%, preferably 0.5 to 3.0%, especially 1.0 to 2.0%, by weight metal relative to the dry weight of the support material.

After loading of the procatalyst onto the support material, the loaded support may be recovered for use in olefin polymerization, e.g. by separation of any excess procatalyst solution and if desired drying of the loaded support, optionally at elevated temperatures, e.g. 25 to 80°C.

Alternatively, a cocatalyst, e.g. an alumoxane or an ionic catalyst activator (such as a boron or aluminium compound, especially a fluoroborate) may also be mixed with or loaded onto the catalyst support material. This may be done subsequently or more preferably simultaneously to loading of the procatalyst, for example by including the cocatalyst in the solution of the procatalyst or, by contacting the procatalyst loaded support material with a solution of the cocatalyst or catalyst activator, e.g. a solution in an organic solvent. Alternatively however any such further material may be added to the procatalyst loaded support material in the polymerization reactor shortly before dosing of the catalyst material into the reactor.

Where an alumoxane cocatalyst is used, then for an unsupported catalyst the aluminium:metallocene metal (M) molar ratio is conveniently 2:1 to 10000:1, preferably 50:1 to 1000:1. Where the catalyst is supported the A1:M molar ratio is conveniently 2:1 to 10000:1 preferably 50:1 to 400:1. Where the further material is loaded onto the procatalyst loaded support material, the support may be recovered and if desired dried before use in olefin polymerization.

The olefin polymerized in the method of the invention is preferably ethylene or an alpha-olefin or a mixture of ethylene and an alpha-olefin or a mixture of alpha olefins, for example C₂₋₂₀ olefins, e.g. ethylene, propene, n-but-1-ene, n-hex-1-ene, 4-methyl-pent-1-ene, n-oct-1-ene etc. The olefins polymerized in the method of the invention may include any compound which includes unsaturated polymerizable groups. Thus for example unsaturated compounds, such as C₆₋₂₀ olefins (including cyclic and polycyclic olefins (e.g. norbornene)), and polyenes, especially C₆₋₂₀ dienes, may be included in a comonomer mixture with lower olefins. Diolefins (i.e. dienes) are suitably used for introducing long chain branching into the resultant polymer. Examples of such dienes include linear dienes such as 1,5-hexadiene, 1,6-heptadiene, 1,8-nonadiene, 1,9-decadiene, etc.

In general, where the polymer being produced is a homopolymer it will preferably be polyethylene or polypropylene. Where the polymer being produced is a copolymer it will likewise preferably be an ethylene or propylene copolymer with ethylene or propylene making up the major proportion (by number and more preferably by weight) of the monomer residues. Comonomers, such as C₄₋₆ alkenes, will generally be incorporated to contribute to the mechanical strength of the polymer product.

Usually metallocene catalysts yield relatively narrow molecular weight distribution polymers; however, if desired, the nature of the monomer/monomer mixture and the polymerization conditions may be changed during the polymerization process so as to produce a broad bimodal or multimodal molecular weight distribution (MWD) in the final polymer product. In such a broad MWD product, the higher molecular weight component contributes to the strength of the end product while the lower molecular weight component contributes to the processability of the product, e.g. enabling the product to be used in extrusion and blow moulding processes, for example for the preparation of tubes, pipes, containers, etc.

A multimodal MWD can be produced using a catalyst material with two or more different types of active polymerization sites, e.g. with one such site provided by the metallocene on the support and further sites being provided by further catalysts, e.g. Ziegler catalysts, other metallocenes, etc. included in the catalyst material.

Polymerization in the method of the invention may be effected in one or more, e.g. 1, 2 or 3, polymerization reactors, using conventional polymerization techniques, e.g. gas phase, solution phase, slurry or bulk polymerization.

In general, a combination of slurry (or bulk) and at least one gas phase reactor is often preferred, particularly with the reactor order being slurry (or bulk) then one or more gas phase.

For slurry reactors, the reaction temperature will generally be in the range 60 to 110 °C (e.g. 85-110 °C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100 °C. In such reactors, polymerization may if desired be effected under supercritical conditions.

For gas phase reactors, the reaction temperature used will generally be in the range 60 to 115 °C (e.g. 70 to 110 °C), the reactor pressure will generally be in the range 10 to 25 bar, and the residence time will generally be 1 to 8 hours. The gas used will commonly be a non-reactive gas such as nitrogen together with monomer (e.g. ethylene).

For solution phase reactors, the reaction temperature used will generally be in the range 130 to 270 °C, the reactor pressure will generally be in the range 20 to 400 bar and the residence time will generally be in the range 0.005 to 1 hour. The solvent used will commonly be a hydrocarbon with a boiling point in the range 80-200 °C.

Generally the quantity of catalyst used will depend upon the nature of the catalyst, the reactor types and conditions and the properties desired for the polymer product. Conventional catalyst quantities, such as described in the publications referred to herein, may be used.

All publications referred to herein are hereby incorporated by reference.

The invention will now be illustrated further by reference to the following non-limiting Examples.

In these examples, BArF is the abbreviation for Tri(perfluorophenyl)borane pTsOH is the abbreviation for p-Toluenesulfonic acid.

### Example 1

### Synthesis of 5, 6-bis(triethylsiloxy)indene (1)

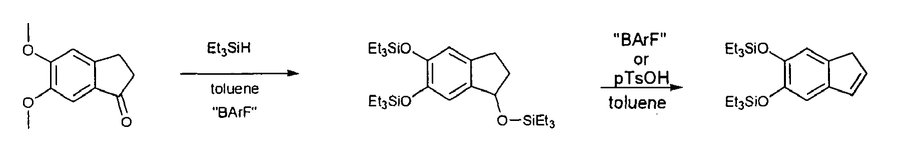

To a flame-dried 1 L two-necked flask containing 600 ml toluene equipped with a water condenser, 15.00 g (78.0 mmol) of 5, 6-dimethoxy-1-indanone, 30.00 g of triethylsilane, and 15 ml of 0.1 M tris(pentafluorophenyl)boron in toluene were added at room temperature. The resulting yellow homogeneous solution was stirring for about 3 h at this temperature. Then the solution became pink and the reaction was exothermic. GC of the reaction mixture indicated that the reaction went complete within 3 min. The reaction mixture was quenched with 3 ml of triethylamine and the mixture became yellow. 15 g of silica gel 60 was added to the flask and the mixture was stirring for 5 min. The solid was removed by filtration giving a colourless filtrate. Toluene in the filtrate was removed under reduced pressure and slightly yellow residual was left. The resulting residual was dissolved in 200 ml toluene and a catalytic amount of p-toluenesulfonic acid monohydrate was added to the flask. The mixture was stirring at room temperature for about 10 h and then the mixture was diluted with 400 ml diethyl ether, washed with 150 ml of saturated NaHCO₃ solution and 100 ml brine, and dried over Na₂SO₄. The volatiles were removed and the residual was distilled to give 13.50 g (35.8 mmol) of 5, 6 - bis(triethylsitoxyl)indene (yield: 46%). 1H NMR (250 MHz, CDCl₃) δ ppm 0.77 (q, *J*=7.65 Hz, 12 H) 1.01 (t, *J*=7.69 Hz, 18 H) 3.30 (s, 2 H) 6.42 (d, *J*=5.62 Hz, 1 H) 6.74 (d, *J*=5.62 Hz, 1H) 6.87 (s, 1 H) 6.96 (s, 1 H).

### b(ii) Synthesis of 5,6-dimethoxyindene via hydrosilylation

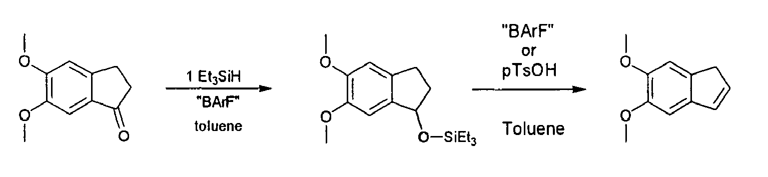

5,6-dimethoxyindanone (5.00 g, 28 mmol) is added at room temperature in a 200 ml of dry toluene solution of Et₃SiH (1.0 equiv, 3.26 g, 28 mmol, 4.48 ml) and tris(pentafluorophenyl)boron (1.8 mol%, 0.5 mmol; 5 ml of 0.1M stock solution in toluene) and stirred at room temperature for 30 hours. The solution was quenched with 0.5 ml of triethylamine and filtered through a short silica plug. 50 mg of *p-*TsOH was added and the solution was stirred at room temperature for 2 hours. After washing with saturated aqueous NaHCO₃ (100 ml), brine (100 ml) and drying over sodium sulphate the solvent was evaporated to leave 5,6-dimethoxyindene as white crystalline solid.

### b(iii) Synthesis of 5,6-bis(triethylsiloxy)indene (1)

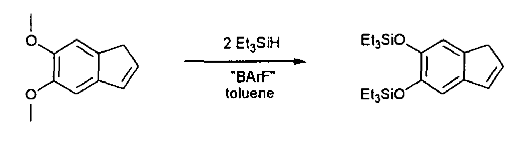

5,6-dimethoxyindene (0.5 g, 2.8 mmol) was added in a 20 ml of stirred dry toluene solution of 5 mol-% of tris(pentafluorophenyl)boron (BArF; 0.14 mmol, 1.4 ml of 0.1 M solution in toluene) and Et₃SiH (2.2 equiv, 0.72 g, 6.2 mmol, 0.99 ml).After 10 minutes the yellow solution was quenched with 0.2 ml of triethylamine, filtered through a short silica plug and evaporated. After column chromatography (Silica gel; hexane/ethyl acetate gradient) the indene derivative was separated as oil.

### Comparative Example 1

### Synthesis of 5,6-diniethoxyindene [5]

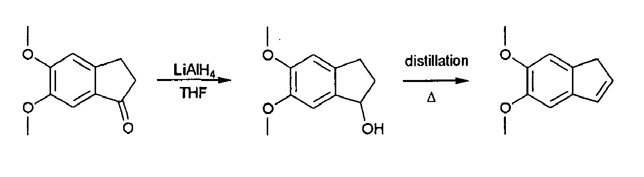

5,6-dimethoxyindanone (12.88 g, 67 mmol) in THF (100 ml) was added slowly to a slurry of LiAlH₄ (25.9 mmol, 0.983 g) in THF (100 ml) at 0 °C. Let to warm to room temperature overnight to result in a grey suspension. Cooled to 0°C and added 0.5 g of LiAlH₄. After 20 minutes water was added to the suspension dropwise very slowly to result in an exothermic reaction with bubbling and foaming. Let to stir overnight. Diluted with Et₂O (200 ml) and filtered the cloudy organic phase through P4 glass filter. Extracted the inorganic phase with some extra Et₂O and filtered. The combined organic phases were washed with aqueous NH₄Cl (2 x 150 ml), aqueous NaHCO₃ (100 ml), brine (100 ml), dried over Na₂ SO₄ and evaporated to leave yellow oil. Distilled and collected the fraction boiling at 155°C-165°C/~10 mmHg, 6.75g (57%) as white crystalline solid. ¹H NMR (250 MHz, CDCl₃): δ 3.24 - 3.42 (m, 2 H) 3.90 (s, 3 H) 3.91 (s, 3 H) 6.42 - 6.49 (m, 1 H) 6.76 - 6.83 (m, 1 H) 6.97 (s, 1 H) 7.08 (s, 1 H).

### Example 2

### Synthesis of bis[5,6-bis(triethylsiloxy)indenyl]zirconium dichloride (2)

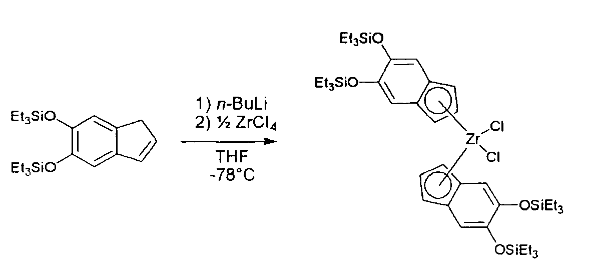

5,6-bis(triethylsiloxy)indene (0.7 g, 1.9 mmol) prepared according to Example 1 was dissolved in 20 ml of dry THF and cooled to -78°C. *n*-BuLi (2.0 mmol, 0.8 ml of 2.5 M solution in toluene) was added dropwise to give a yellow solution. After stirring at -78°C for 15 minutes, ZrCl₄ (0.9 mol, 0.22 g) was added. The resulting suspension was let to warm to room temperature overnight. The resulting yellow solution was evaporated to dryness to leave an oily semisolid. *n*-Pentane was added and the suspension was filtered through Celite to remove LiCl and other insoluble materials. The filtrate was concentrated and cooled to -20°C overnight to give yellow needle like crystals (0.32 g, 38 %). ¹H NMR (250 MHz, CDCl₃): δ 0.73 - 0.88 (m, 24 H) 0.91 - 1.13 (m, 36 H) 5.92 (d, *J*=3.42 Hz, 4 H) 6.36 (t, *J*=3.42 Hz, 2 H) 6.89 (s, 4 H).

### Example 3

### Synthesis of bis[5,6-di(triethylsiloxy)indenyl]zirconium dibenzyl (3)

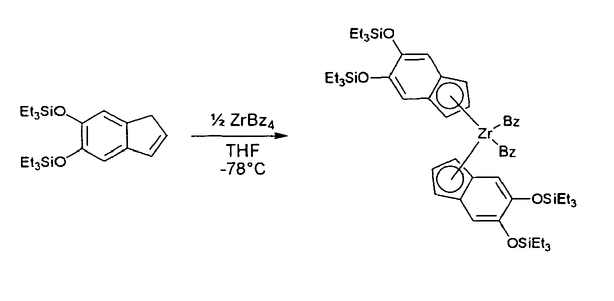

5,6-bis(triethylsiloxy)indene (1.51 g, 4.0 mmol) prepared according to Example 1 and tetrabenzylzirconium (0.91 g, 2.0 mmol) are dissolved in 50 ml of dry benzene and heated to 65°C for 24 hours. The volatiles are removed *in vacuo* and the product is taken up in *n*-pentane. After concentration and cooling to -20 °C overnight **3** is obtained as crystalline solid.

### Example 4

### Synthesis of [5,6-di(triethlsiloxy)indenyl] zirconium tribenzyl (4)

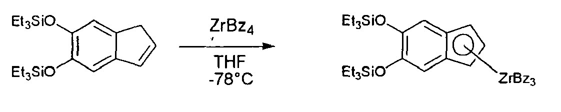

The procedure of Example 3 is repeated except that the amount of 5,6-bis(triethylsiloxy)indene is 0.75 g (2.0 mmol) instead of 1.51 g.

### Example 5

### Synthesis of bis[5,6-di(triethylsiloxy)indenyl] hafnium dichloride (5)

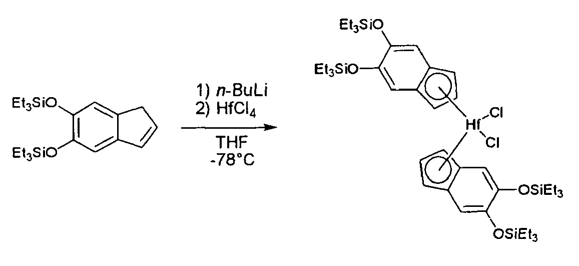

5,6-bis(triethylsiloxy)indene (1.51 g, 4.0 mmol) prepared according to Example 1 was dissolved in 30 ml of dry THF and cooled to -78°C. *n*-BuLi (4.0 mmol, 1.6 ml of 2.5 M solution in hexane) was added dropwise and the resulting yellow solution was stirred at -78°C for 5 minutes. HfCl₄ (2.0 mmol, 0.64 g) was added at -78°C. Let to warm to room temperature overnight to obtain almost clear yellow solution. The solvent was evaporated and the yellow solid residue was dissolved in *n*-pentane. The suspension was filtered through Celite to remove lithium chloride and other insoluble materials. After concentration and cooling the target complex was obtained as yellow crystalline solid (0.78 g, 39 %). ¹H NMR (250 MHz, CDCl₃) δ 0.74 - 0.86 (m, 24 H) 0.96 - 1.09 (m, 36 H) 5.78 (d, *J*=3.42 Hz, 4 H) 6.31 (t, *J*=3.30 Hz, 2 H) 6.87 (s, 4 H)

### Example 6

### Synthesis of bis[5,6-di(triethylsiloxy)indenyl] titanium dichloride (6)

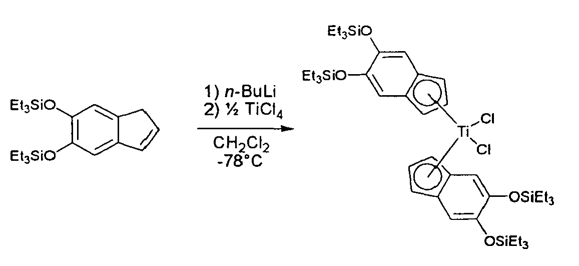

5,6-bis(triethylsiloxy)indene (1.51 g, 4.0 mmol) prepared according to Example 1 is dissolved in 30 ml of dry THF and cooled to -78°C. *n*-BuLi (4.0 mmol, 1.6 ml of 2.5 M solution in hexane) is added dropwise and the resulting yellow solution is stirred at -78°C for 15 mins. The solvent is removed under reduced pressure to leave 5,6-bis(triethylsiloxy)indenyl-lithium as a powder, which is stored at -78°C. TiCl₄ (2.0 mmol, 0.379 g, 2 ml of 1 M solution in CH₂Cl₂) is dissolved in CH₂Cl₂ (30 ml) and cooled to -78°C. The solution of TiCl₄ is added on cooled lithium salt and the resulting mixture is stirred at -78°C for 2 hours and then let to warm to room temperature overnight. The solvent is evaporated. The residue is dissolved in *n-*pentane and filtered through Celite to remove lithium chloride and other insoluble material. After concentration and cooling overnight **6** is obtained as crystalline solid.

### Example 7

### Synthesis of [5,6-di(triethylsiloxy)indenyl] titanium trichloride (7)

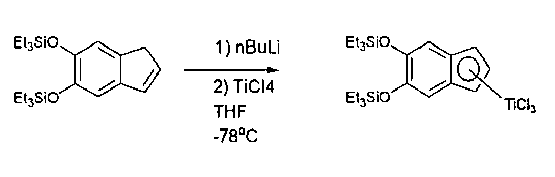

The procedure of Example 6 is repeated except that the amount of 5,6-bis(triethylsiloxy)indene is 0.75 g (2.0 mmol) instead of 1.51 g.

### Example 8

### Synthesis of 5,6-(diethylcyclosiladioxo)-indene (8)

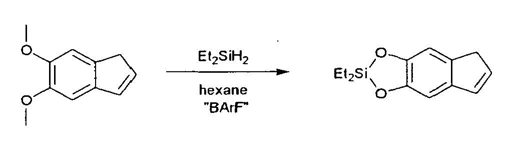

5,6-dimethoxyindene (0.5 g, 2.8 mmol) was added in a solution of Et₂SiH₂ (1.2 equiv, 0.30 g, 3.4 mmol, 0.44 ml) and tris(pentafluorophenyl)boron (BArF; 5 mol - %, 0.14 mmol, 1.4 ml of 0.1M solution in toluene) in toluene (25 ml) at RT. An exothermic reaction with heavy gas evolution followed. After 3 minutes the solution was quenched with triethylamine, filtered through a short plug of silica and evaporated to dryness. Pure 5,6-(diethylcyclosiladioxo)-indene is obtained after column chromatography.

### Example 9

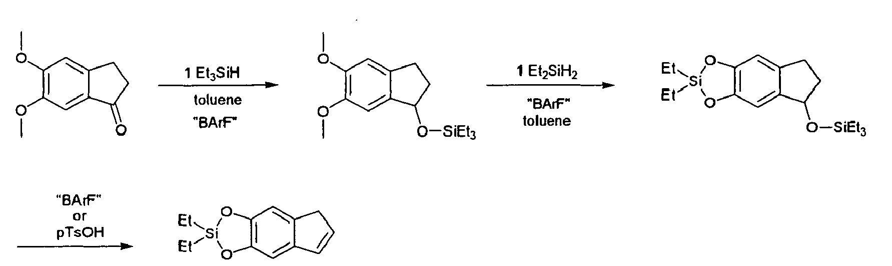

5,6-dimethoxyindanone (5.00 g, 28 mmol) was added at RT in a 200 ml of dry toluene solution of Et₃SiH (1.0 equiv, 3.26 g, 28 mmol, 4.48 ml) and tris(pentafluorophenyl)boron (1.8 mol-%, 0.5 mmol; 5 ml of 0.1M stock solution in toluene). After 30 hours 1 equiv. of Et₂ SiH₂ (0.25 g, 28 mmol) is added. The mixture is stirred at room temperature for an additional 15 minutes. The mixture is quenched with 0.5 ml of triethylamine and filtered through a short silica plug. 50 mg of *p-*TsOH is added and the solution is stirred at RT for 2 hours. After washing with saturated aqueous NaHCO₃ (100 ml), brine (100 ml) and drying over sodium sulphate the solvent is evaporated. Pure 5,6-(diethylcyclosiladioxo)-indene (**8**) is obtained after column chromatography.

### Example 10

### Synthesis of (3H-indene-4,5-diyl)bis(oxy)bis(triethylsilane) (9)

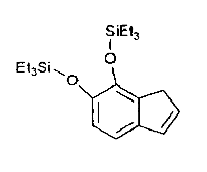

The procedure of Example 1 is repeated, except that 4,5-dimethoxyindanone is used as a starting material in place of 5,6-dimethoxyindanone.

### Example 11

### Synthesis of 2,2-diethyl-8H-indeno[5,4-d][1,3,2]dioxasilole (10)

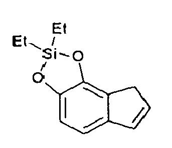

The procedure of Example 8 is repeated, except that 4,5-dimethoxyindanone is used as a starting material in place of 5,6-dimethoxyindanone.

### Example 12

### Synthesis of 2,2,4,4-tetraethyl-7H-indeno[5,6-f][1,3,5,2,4]trioxadisilepine (11)

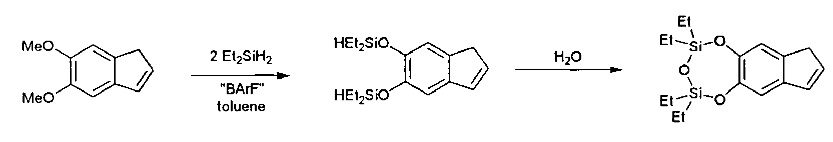

5,6-dimethoxyindene (0.5 g, 2.8 mmol) is added to a solution of Et₂ SiH₂ (2.0 equiv., 0.50 g, 5.6 mmol) and tris(pentafluorophenyl)boron (BArF; 5 mol- %, 0.14 mmol, 1.4 ml of 0.1 M solution in toluene) in toluene (25 ml) at room temperature. An exothermic reaction with methane evolution results. The solution is stirred at RT for 10 minutes. 1 ml of water is added to quench the catalyst and to induce the trioxasilepine ring formation. After stirring at RT for an additional 30 minutes the mixture is poured on water and extracted with diethyl ether (2 x 50 ml). The combined organic fractions are washed with saturated aqueous KHCO₃ (50 ml), brine (50 ml), dried over Na₂SO₄ and evaporated to yield **11.**

### Example 13

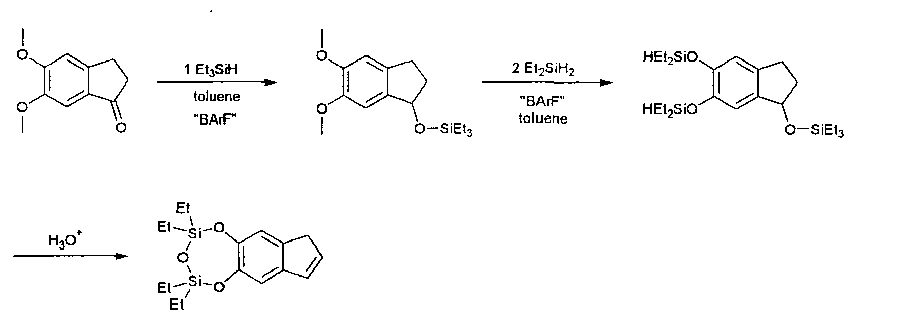

5,6-dimethoxyindanone (5.00 g, 28 mmol) is added at RT in a 200 ml of dry toluene solution of Et₃SiH (1.0 equiv, 3.26 g, 28 mmol, 4.48 ml) and tris(pentafluorophenyl)boron (1.8 mol-%, 0.5 mmol; 5 ml of 0.1M stock solution in toluene). After 30 hours 2 equiv. of Et₂ SiH₂ (4.94 g, 56 mmol) is added. The mixture is stirred at room temperature for an additional 15 minutes. 10 ml of 1% HCl is added and the mixture is stirred at room temperature for 1 hour. After washing with saturated aqueous NaHCO₃ (100 ml), brine (100 ml) and drying over sodium sulphate the solvent is evaporated. Pure **11** is obtained after column chromatography.

Basic ligand units as **11** can easily be converted into metallocene complexes with methods described within these examples.

### Example 14

### Synthesis of 2,2,4,4-tetraethyl-10H-indeno[5,4-f][1,3,5,2,4]trioxadisilepine (12)

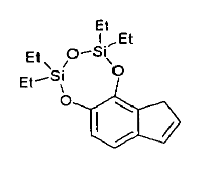

The procedure of Example 12 is repeated, except that 4,5-dimethoxyindanone is used as a starting material in place of 5,6-dimethoxyindanone.

Basic ligand units as **12** can easily be converted into metallocene complexes with methods described within these examples.

### Example 15

### Synthesis of 2,2,3,3-tetraethyl-3,8-dihydro-2H-indeno[5,6-e][1,4,2,3]dioxadisiline (13)

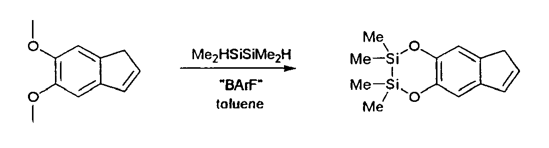

5,6-dimethoxyindene (0.5 g, 2.8 mmol) is added in a solution of tetramethyldisilane (0.33 g. 2.8 mmol) and tris(pentafluorophenyl)boron (BArF; 5 mol-%, 0.14 mmol, 1.4 ml of 0.1M solution in toluene) in toluene (25 ml) at RT. An exothermic reaction with gas evolution is observed. The mixture is stirred at room temperature for ten minutes. The solution is quenched with triethylamine, filtered through a short plug of silica and evaporated to dryness. Pure **13** is obtained after column chromatography.

### Example 16

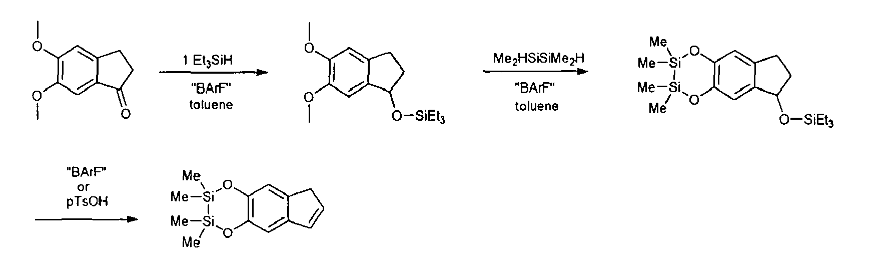

5,6-dimethoxyindanone (5.00 g, 28 mmol) is added at RT to a 200 ml of dry toluene solution of Et₃SiH (1.0 equiv, 3.26 g, 28 mmol, 4.48 ml) and tris(pentafluorophenyl)boron (1.8 mol-%, 0.5 mmol; 5 ml of 0.1M stock solution in toluene). After 30 hours 1 equiv. of tetraethyldisilane (6.62 g, 56 mmol) is added. The mixture is stirred at room temperature for an additional 15 minutes. The mixture is quenched with 0.5 ml of triethylamine and filtered through a short plug of silica gel. 50 mg of *p*-TsOH is added and the solution is stirred at RT for 2 hours. After washing with saturated aqueous NaHCO₃ (100 ml), brine (100 ml) and drying over sodium sulphate the solvent is evaporated. Pure **13** is obtained after column chromatography.

Basic ligand units as **13** can easily be converted into metallocene complexes with methods described within these examples.

### Example 17

### Synthesis of 2,2,3,3-tetraethyl-3,9-dihydro-2H-indeno[5,4-e][1,4,2,3]dioxadisiline (14)

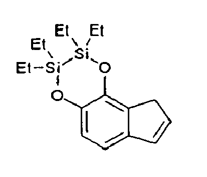

The procedure of Example 16 is repeated, except that 4,5-dimethoxyindanone is used as a starting material in place of 5,6-dimethoxyindanone.

Basic ligand units as **14** can easily be converted into metallocene complexes with methods described within these examples.

### Example 18

### Synthesis of dimethylsilane-bis[5, 6-di(triethylsiloxyl)indenyl dilithium salt (15)

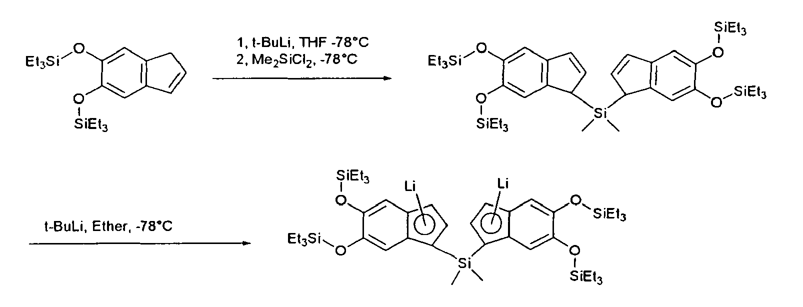

To a flame-dried 100 ml Schlenk flask, 100 ml THF and 6.14 g (15.0 mmol) of 5, 6-bis(triethylsiloxyl)indene (GC purity: 92%) were added. The mixture was cooled to - 78°C and then 10 ml of t-BuLi (1.5 M in THF and pentane) was added slowly. After addition of t-BuLi, the resulting yellow mixture was stirring at this temperature for about 1h and then 0.97 g of dimethyldichlorosilane in 5 ml THF was added to the tube slowly. The reaction mixture was stirring overnight and the volatiles were removed *in vacuo.* 150 ml of dichloromethane was used to extract the product and the dichloromethane was removed under reduced pressure to give a yellow residue. High resolution GC-MS indicated that in the residual there are 80% of silylbridged bis-5,6-bis(triethylsiloxyl)indene. The residue was dissolved in 100 ml diethyl ether in a 250 ml two-necked flame-dried flask and the solution was cooled to -78°C. 10 ml of t-BuLi (1.5 M in THF and pentane) was added to the flask and stirring overnight. The volatiles were removed under vacuum. 100 ml of n-hexane was added to the resulting oily solid and the precipitate was filtrated and washed with 10 ml of n-hexane for three times. The solid part was dried under vacuum for 4 hours. NMR of the precipitate indicated that the product was dilithium salt of the bridged ligand with extra diethyl ether.

### Example 19

### Synthesis of rac-dimethylsilane-bis[5, 6-di(triethylsiloxyl)indenyl zirconium dichloride (16)

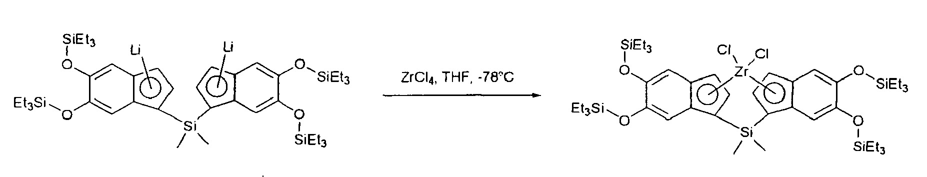

To a 250 ml flame-dried two-necked flask, 1.456 g of dilithium salt of silylbridged bis-5,6-bis(triethylsiloxyl)indene **15** and 200 ml of THF were added. The solution was cooled to -78°C and 0.420 g of ZrCl₄ was added to the flask slowly. The resulting mixture was stirred at -78°C for 8 h and then the temperature was raised to room temperature. The volatiles were removed *in vacuo* and the product was extracted with 50 ml CH₂Cl₂. The volatiles were removed under vacuum and NMR and EIMS were done to detect the product. In the EIMS spectrum, parent ions of the composition C₄₄H₇₄Si₅O₄ZrCl₂⁺ were observed in the appropriate isotope ratios at m/e 966-975. NMR of the residual showed that *rac* and *meso* forms of silyl bridged zirconocene were formed with the ratio of 4:1.

### Example 20

### Synthesis of rac-dimethylsilane-bis[5, 6-di(triethylsiloxyl)indenyl hafnium dichloride (17)

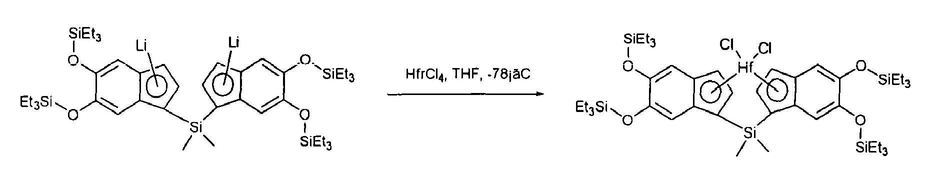

To a 250 ml flame-dried two-necked flask, 1.456 g of silylbridged bis-5, 6-bis(triethylsiloxyl)indene dilithium salt and 200 ml of THF are added. The solution is cooled to -78°C and 0.575 g of HfCl₄ is added to the flask slowly. The resulting mixture is stirring at this temperature for 8 h and then the temperature is raised to room temperature. THF is removed under vacuum and the product is extracted with 50 ml CH₂Cl₂. The volatiles are removed under vacuum and NMR and EIMS are done to detect the product.

### Example 21

### Synthesis of ethylene-bis[5,6-di(triethylsiloxyl)indenyl dilithium salt (18)

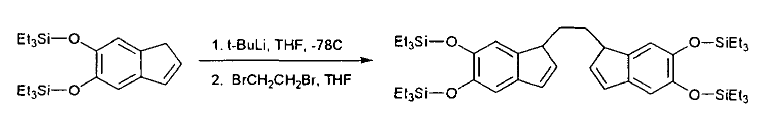

A mixture of THF (100 ml) and 5,6-bis(triethylsiloxy)indene (5.00 g, 13.3 mmol) is cooled to -78°C. *t*-BuLi (8.9 ml, 13.3 mmol, 1.5 M solution in THF and pentane) is added slowly and the mixture is stirred for 1 h at -78°C. 1,2-Dibromoethane (0.58 ml, 6.65 mmol) in THF (5 ml) is added slowly to the cold mixture and stirring is continued overnight. The mixture is concentrated and extracted with dichloromethane (3 x 50 ml). Concentration after drying over Na₂SO₄ gives the raw product.

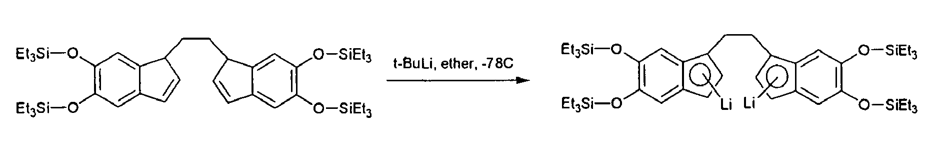

The same method is used as for the synthesis of dilithium salt of silylbridged bis-5,6-bis(triethylsiloxyl)indene **17** in Example 18. Bis(5,6-bis(triethylsiloxy)indenyl)ethane **18** (5.00 g, 6.42 mmol) and *t*-BuLi (8.6 ml, 12.84 mmol, 1.5 M solution in THF and pentane) in diethyl ether (100 ml) gives dilithium salt. The volatiles are removed *in vacuo.* 100 ml of n-hexane is added to the resulting oily solid and the precipitate is filtrated and washed with 10 ml of n-hexane three times. The solid part is then dried under vacuum until becoming a free flowing powder.

### Example 22

### Synthesis of rac-ethylene-bis[5, 6-di(trielhylyiloxyl)indenyl zirconium dichloride (19)

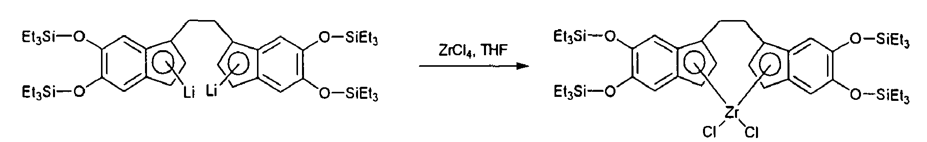

The same method is used as for the synthesis of dimethylsilyl bridged bis-(5,6-bis(triethylsiloxy)indene)zirconium dichloride **16** in Example 19. Dilithium salt of bis(5,6-bis(triethylsiloxy)indenyl)ethane **18** (5.27 g, 6.42 mmol) and ZrCl₄ (1.50 g, 6.42 mmol) give raw product. Recrystallisation gives isolated *rac* and *meso* material.

### Example 23

### Synthesis of rac-ethylene-bis[5, 6-di(triethylsiloxyl)indenyl hafnium dichloride (20)

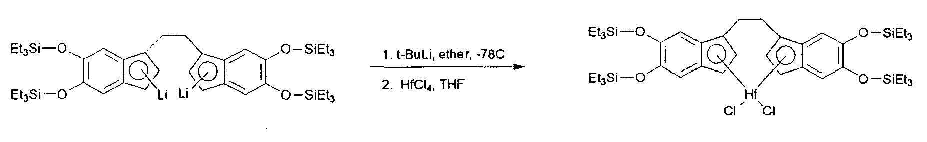

The same method is used as for the synthesis of dimethylsilyl bridged bis-(5,6-bis(triethylsiloxy)indene)hafnium dichloride **17** in Example 20. Dilithium salt of bis(5,6-bis(triethylsiloxy)indenyl)ethane **18** (5.27 g, 6.42 mmol) and HfCl₄ (2.06 g, 6.42 mmol) give raw product. Recrystallisation gives isolated *rac* and *meso* material.

### Example 24

### Synthesis of dimethylsilane-bis (2,2-dielhyl-5H-indeno[5,6-d][1,3,2]dioxasilol-5-yl) dilithium salt (21)

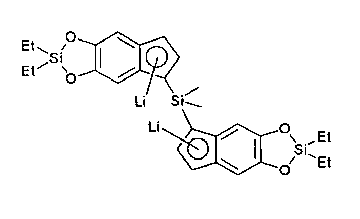

The procedure of Example 18 is repeated except that 5,6-(diethylcyclosiladioxo)-indene prepared according to Example 8 is used as a starting material in an amount of 15.0 mmol in place of the 5, 6-bis(triethylsiloxyl)indene.

### Example 25

### Synthesis of rac-dimethylsilane-bis(2,2-diethyl-SH-indeno[5,6-d] [1,3,2]dioxasilol-5-yl) zirconium dichloride (22)

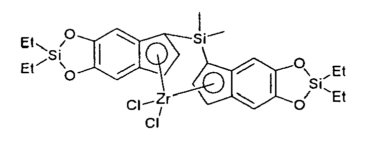

The procedure of Example 19 is repeated except that dimethylsilane-bis(2,2-diethyl - 5H-indeno[5,6-d][1,3,2]dioxasilol-5-yl) dilithium salt produced according to Example 24 is used as a starting material in place of silylbridged bis-5,6-bis(triethylsiloxyl)indene.

### Example 26

### Synthesis of dimethylsilane-bis(4,5-bis(triethylsilyloxy)-1H-inden-1-yl)dilithium salt (23)

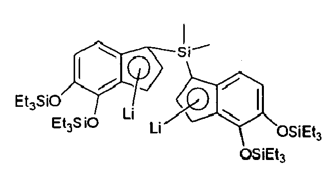

The procedure of Example 18 is repeated except that 15.0 mmol of (3H -indene-4,5-diyl)bis(oxy)bis(triethylsilane) prepared according to Example 9 is used as a starting material in place of the 5, 6-bis(triethylsiloxyl)indene.

### Example 27

### Synthesis of rac-dimelhylsilane-bis(4,5-bis(triethylsilyloxy)-1H-inden-1-yl) zirconium dichloride (24)

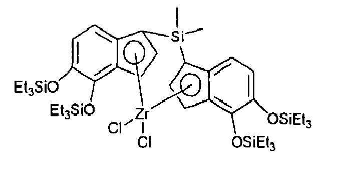

The procedure of Example 19 is repeated except that dimethylsilane-bis(4,5-bis(triethylsilyioxy)-1H-inden-1-yl)dilithium salt produced according to Example 26 is used as a starting material in place of silylbridged bis-5,6-bis(triethylsiloxyl)indene.

### Example 28

### Synthesis of bis(2,2-diethyl-6H-indeno[4,5-d][1,3,2]dioxasilol-6-yl) dimethylsilane (25)

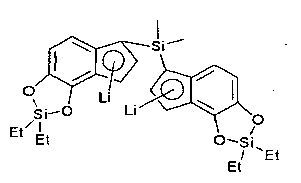

The procedure of Example 18 is repeated except that 15.0 mmol of 2,2-diethyl-8H-indeno[5,4-d][1,3,2]dioxasilole prepared according to Example 11 is used as a starting material in place of the 5, 6-bis(triethylsiloxyl)indene.

### Example 29

### Synthesis of rac-dimethylsilane-bis(2,2-diethyl-6H-indeno[4,5-d][1,3,2]dioxasilol-6-yl) zirconium dichloride (26)

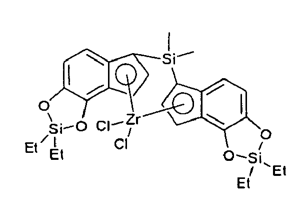

The procedure of Example 19 is repeated except that bis(2,2-diethyl-6H-indeno[4,5-d][1,3,2]dioxasilol-6-yl) dimethylsilane produced according to Example 28 is used as a starting material in place of silylbridged bis-5,6-bis(triethylsiloxyl)indene.

### Example 30

### Synthesis of 2,3-6,7-bis-(diethylcyclosiladioxo)-fluorene (27)

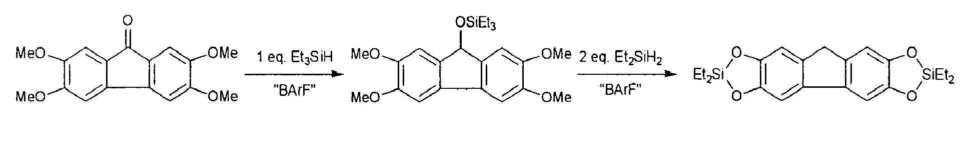

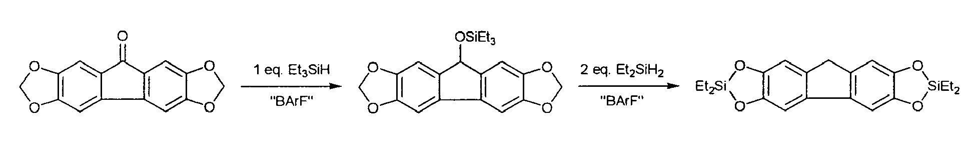

**27** (or the tetra-trialkylsiloxy versions) can be synthesised and isolated according to the procedures described for compound **1** (or **8**) using 2,3,6,7-tetramethoxy-fluoren-9-one (R. L. Dow. WO 9221660, 1992, Pfizer Inc., USA, R. L. Dow. WO 9221641, 1992, Pfizer Inc., US) or 10H-Fluoreno[2,3-d:6,7-d']bis[1,3]dioxol-10-one (E. Brown, J. P. Robin, R. Dhal, Tetrahedron 38 (1982) 2569, F. Dallacker, G. Adolphen, Justus Liebigs Annalen der Chemie 694 (1966) 110) as starting materials.

Basic ligand units as **27** (or the tetra-trialkylsiloxy versions) can easily be converted into metallocene complexes with methods described within these examples.

### Example 31

### Synthesis of Indene (28)

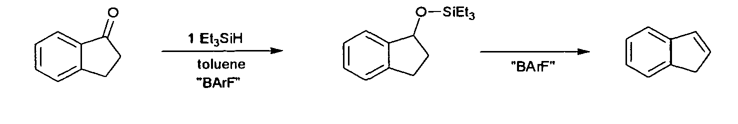

Tris(pentafluorophenyl)boron (1,8 mol-%, 0.27 mmol, 2.7 ml of 0.1 M solution in toluene) was added to a solution of 1-indanone (2.0 g, 15.1 mmol) and Et₃SiH (1.05 equiv., 1.85 g, 15.9 mmol) in toluene (90 ml) at room temperature. The solution was stirred at room temperature for several days to obtain indene.

### Example 32

### Synthesis of 2,4,7-trimethyl-Indene (29)

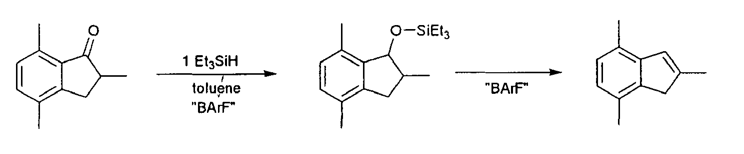

Tris(pentafluorophenyl)boron (1,8 mol-%, 0.052 mmol, 0,52 ml of 0.1 M solution in toluene) was added to a solution of 2,4,7-trimethyl-1-indanone (0.5 g, 2.9 mmol) and Et₃SiH (1.05 equiv., 0.35 g, 3.0 mmol) in toluene (10 ml) at room temperature. The solution was stirred at room temperature overnight to obtain 2,4,7-trimethylindene.

## Claims

1. A compound of formula (I) or (II) 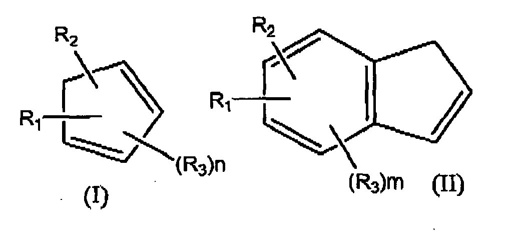 wherein R¹ and R² are bound to adjacent carbon atoms and are taken together to form a group -X-SiR'₂-Y-SiR'₂-X- or -X-SiR'₂-X-;
each R', which may be the same or different, is a C₁₋₂₀-hydrocarbyl group; each X, which may be the same or different, is O, S, NH;
Y is a group X or a bond;
each R₃, which may be the same or different, is a ring substituent or two R₃ groups taken together can form a further optionally R₃ substituted ring (e.g. to form an optionally substituted fluorenyl structure);
m is 0 to 5; and
n is 0 to 3.

2. A compound as claimed in claim 1 wherein R¹ and R² are bound to adjacent carbon atoms and are taken together to form a group -O-SiR'₂-O-SiR'₂-O-, -O-SiR'₂-SiR'₂-O- or -O-SiR'₂-O-;

3. A metallocene procatalyst compound of formula (III)
Cp^{a}(Cp^{b})ₚMZ₃₋ₚ (III)
wherein Cp^{a} is a compound of formula (I') or (II') 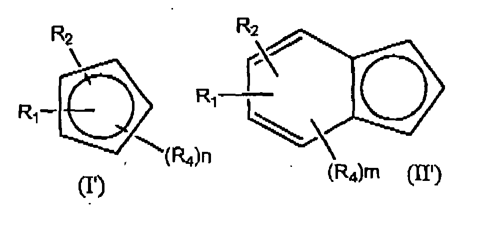 wherein R¹ and R² are bound to adjacent carbon atoms and are taken together to form a group -X-SiR'₂-Y-SiR'₂-X- or -X-SiR'₂-X-;
each R', which may be the same or different, is a C₁₋₂₀-hydrocarbyl group; each X, which may be the same or different, is O, S, NH;
Y is a group X or a bond;
m is 0 to 5;
n is 0 to 3
R₄ is a group R₃ or a R₄ group, together with a substituent on ring Cp^{b} can be taken together to form a bridge between the Cp^{a} and Cp^{b} ligands;
R₃ is a ring substituent or two R₃ groups taken together can form a further optionally R₃ substituted ring;
Cp^{b} is a group Cp^{a} or a cyclopentadienyl containing ligand;
M is a group 3 to 7 transition metal;
Z is a sigma ligand; and
p is 0 or 1.

4. A procatalyst as claimed in claim 3 wherein p is 1 and Cp^{b} is Cp^{a}.

5. A process for the preparation of a compound of formula (I) or (II) 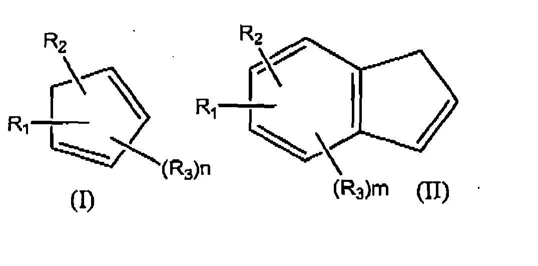 wherein R¹ and R² are bound to adjacent carbon atoms and are taken together to form a group -X-SiR'₂-Y-SiR'₂-X- or -X-SiR'₂-X-;
each R', which may be the same or different, is a C₁₋₂₀-hydrocarbyl group; each X, which may be the same or different, is O, S, NH;
Y is a group X or a bond;
each R₃, which may be the same or different, is a ring substituent or two R₃ groups taken together can form a further optionally R₃ substituted ring (e.g. to form an optionally substituted fluorenyl structure);
m is 0 to 5; and
n is 0 to 3;
comprising reacting a compound of formula (I") or (II") 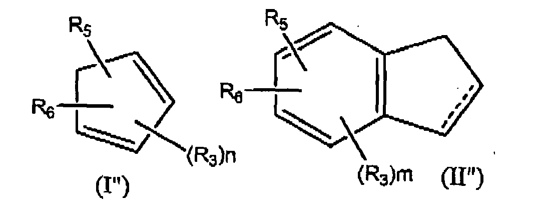 wherein R₅ and R₆ are present on adjacent carbon atoms and represent hydrocarbyloxy groups; and the dotted line represents an optionally present double bond;
with a compound R'₂SiH₂ or HR'₂SiSiR'₂H;
in the presence of a Lewis acid.

6. A process as claimed in claim 4 or 5 wherein said Lewis acid contains boron.

7. A process as claimed in claim 4 to 6 wherein said Lewis acid is B(ArF)₃ wherein ArF represents a fluorinated aromatic group.

8. A process as claimed in claim 4 to 7 wherein B(ArF)₃ is B(C₆F₅)_{3.}

9. A process as claimed in claim 8 comprising the steps set forth below: 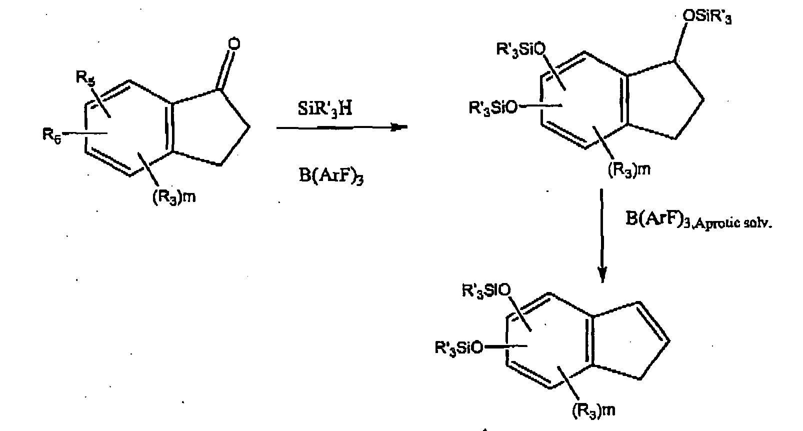 wherein each R', which may be the same or different, is a C₁₋₂₀-hydrocarbyl group;
each R₃, which may be the same or different, is a ring substituent or two R₃ groups taken together can form a further optionally R₃ substituted ring;
m is 0 to 5;
R₅ and R₆ are present on adjacent carbon atoms and represent hydrocarbyloxy groups.

## Patentansprüche

1. Verbindung der Formel (I) oder (II): 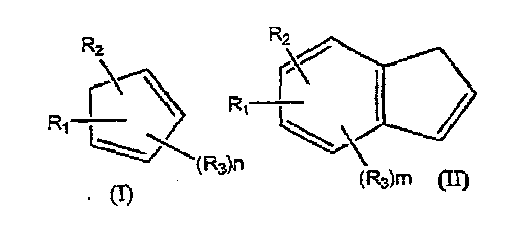 worin
R¹ und R² an benachbarte Kohlenstoffatome gebunden sind und zusammen die Gruppe -X-SiR'₂-Y-SiR'₂-X- oder -X-SiR'₂-X-bilden;
R', das gleich oder verschieden sein kann, jeweils ein C₁₋₂₀-Kohlenwasserstoffrest ist;
X, das gleich oder verschieden sein kann, jeweils O, S, NH ist; Y die Gruppe X oder eine Bindung darstellt;
R₃, das gleich oder verschieden sein kann, jeweils ein Ringsubstituent ist oder zwei Reste R₃ zusammen einen weiteren, gegebenenfalls R₃-substituierten Ring bilden können (so daß z.B. eine gegebenenfalls substituierte Fluorenylstruktur gebildet wird);
m gleich 0 bis 5 ist; und
n gleich 0 bis 3 ist.

2. Verbindung nach Anspruch 1, wobei R¹ und R² an benachbarte Kohlenstoffatome gebunden sind und zusammen die Gruppe -O-SiR'₂-O-SiR'₂-O-; -O-SiR'₂-SiR'₂-O- oder -O-SiR'₂-O-bilden.

3. Metallocen-Prokatalysatorverbindung der Formel (III)
Cp^{a}(Cp^{b})ₚMZ₃₋ₚ (III)
worin
Cp^{a} eine Verbindung der Formel (I') oder (II') ist 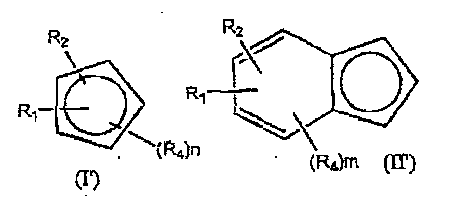 R¹ und R² an benachbarte Kohlenstoffatome gebunden sind und zusammen die Gruppe -X-SiR'₂-Y-SiR'₂-X- oder -X-SiR'₂-X-bilden;
R', das gleich oder verschieden sein kann, jeweils ein C₁₋₂₀-Kohlenwasserstoffrest ist;
X, das gleich oder verschieden sein kann, jeweils O, S, NH ist; Y die Gruppe X oder eine Bindung darstellt;
m gleich 0 bis 5 ist ; und
n gleich 0 bis 3 ist;
R₄ der Rest R₃ ist oder ein Rest R₄ gemeinsam mit einem Substituenten am Ring Cp^{b} zusammen eine Brücke zwischen den Cp^{a}- und Cp^{b}-Liganden bilden kann;
R₃ ein Ringsubstituent ist oder zwei Reste R₃ zusammen einen weiteren, gegebenenfalls R₃-substituierten Ring bilden können; Cp^{b} der Rest Cp^{a} oder ein Cyclopentadienyl enthaltender Ligand ist;
M ein Übergangsmetall der Gruppen 3 bis 7 ist;
Z ein σ-Ligand ist; und
p gleich 0 oder 1 ist.

4. Prokatalysator nach Anspruch 3, wobei p gleich 1 ist und Cp^{b} gleich Cp^{a} ist.

5. Verfahren zur Herstellung einer Verbindung der Formel (I) oder (II) 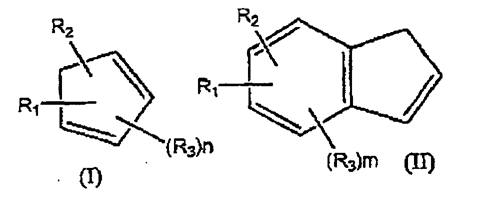 worin
R¹ und R² an benachbarte Kohlenstoffatome gebunden sind und zusammen die Gruppe -X-SiR'₂-Y-SiR'₂-X- oder -X-SiR'₂-X-bilden;
R', das gleich oder verschieden sein kann, jeweils ein C₁₋₂₀-Kohlenwasserstoffrest ist;
X, das gleich oder verschieden sein kann, jeweils O, S, NH ist; Y die Gruppe X oder eine Bindung darstellt;
R₃, das gleich oder verschieden sein kann, jeweils ein Ringsubstituent ist oder zwei Reste R₃ zusammen einen weiteren, gegebenenfalls R₃-substituierten Ring bilden können (so daß z.B. eine gegebenenfalls substituierte Fluorenylstruktur gebildet wird);
m gleich 0 bis 5 ist; und
n gleich 0 bis 3 ist;
umfassend die Umsetzung einer Verbindung der Formel (I") oder (II") 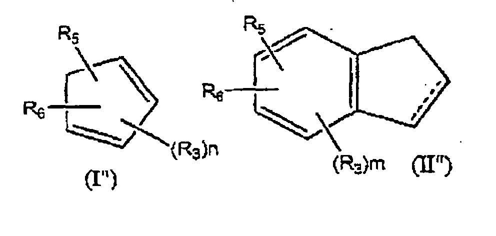 worin R₅ und R₆ an benachbarten Kohlenstoffatomen vorliegen und Hydrocarbyloxyreste darstellen und die gestrichelte Linie für eine gegebenenfalls vorhandene Doppelbindung steht;
mit der Verbindung R'₂SiH₂ oder HR'₂SiSiR'₂H in Gegenwart einer Lewis-S äure.

6. Verfahren nach Anspruch 4 oder 5, wobei die Lewis-Säure Bor enthält.

7. Verfahren nach Anspruch 4 bis 6, wobei die Lewis-Säure B(ArF)₃ ist, wobei ArF für einen fluorierten aromatischen Rest steht.

8. Verfahren nach Anspruch 4 bis 7, wobei B(ArF)3 gleich B(C₆F₅)₃ ist.

9. Verfahren nach Anspruch 8, das die nachfolgenden Schritte umfaßt: 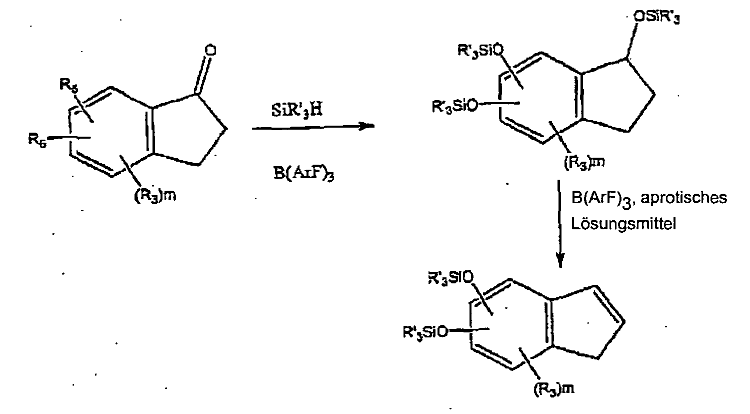 worin R', das gleich oder verschieden sein kann, jeweils ein C₁₋₂₀-Kohlenwasserstoffrest ist;
R₃, das gleich oder verschieden sein kann, jeweils ein Ringsubstituent ist oder zwei Reste R₃ zusammen einen weiteren gegebenenfalls R₃-substituierten Ring bilden können;
m gleich 0 bis 5 ist;
R₅ und R₆ an benachbarten Kohlenstoffatomen vorliegen und für Hydrocarbyloxygruppen stehen.

## Revendications

1. Composé de formule (I) ou (II) 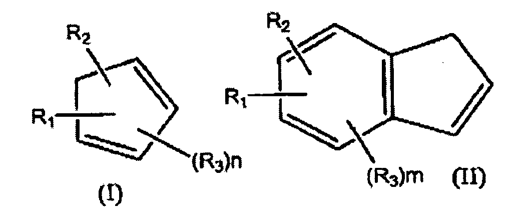 dans lesquelles R¹ et R² sont liés à des atomes de carbone adjacents et sont pris ensemble pour former un groupe -X-SiR'₂-Y-SiR'₂-X- ou -X-SiR'₂-X- ;
les R', qui peuvent être identiques ou différents, sont chacun un groupe hydrocarbyle en C₁ à C₂₀ ;
les X, qui peuvent être identiques ou différents, sont chacun O, S, NH ;
Y est un groupe X ou une liaison ;
les R₃, qui peuvent être identiques ou différents, sont chacun un substituant de cycle ou deux groupes R₃ pris ensemble peuvent former un autre cycle facultativement substitué par un R₃ (par exemple, pour former une structure fluorényle facultativement substituée) ;
m est 0 à 5 ; et
n est 0 à 3.

2. Composé selon la revendication 1, dans lequel R¹ et R² sont liés à des atomes de carbone adjacents et sont pris ensemble pour former un groupe -O-SiR'₂-O-SiR'₂-O-, -O-SiR'₂-SiR'₂-O- ou -O-SiR'₂-O-.

3. Composé procatalyseur à base de métallocène de formule (III)
Cp^{a}(Cp^{b})ₚMZ₃₋ₚ (III)
dans laquelle Cp^{a} est un composé de formule (I') ou (II') 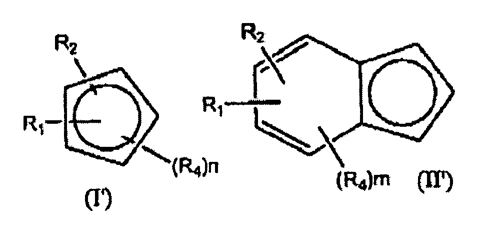 dans lesquelles R¹ et R² sont liés à des atomes de carbone adjacents et sont pris ensemble pour former un groupe -X-SiR'₂-Y-SiR'₂-X- ou -X-SiR'₂-X- ;
les R', qui peuvent être identiques ou différents, sont chacun un groupe hydrocarbyle en C₁ à C₂₀ ;
les X, qui peuvent être identiques ou différents, sont chacun O, S, NH ;
Y est un groupe X ou une liaison ;
m est 0 à 5 ;
n est 0 à 3 ;
R₄ est un groupe R₃ ou un groupe R₄, ensemble avec un substituant sur le cycle Cp^{b} peuvent être pris ensemble pour former un pont entre les ligands Cp^{a} et Cp^{b} ;
R₃ est un substituant de cycle ou deux groupes R₃ pris ensemble peuvent former un autre cycle facultativement substitué par un R₃ ;
Cp^{b} est un groupe Cp^{a} ou un ligand contenant un cyclopentadiényle ;
M est un métal de transition des groupes 3 à 7 ;
Z est un ligand sigma ; et
p est 0 ou 1.

4. Procatalyseur selon la revendication 3, dans lequel p est 1 et Cp^{b} est Cp^{a}.

5. Procédé de préparation d'un composé de formule (I) ou (II) 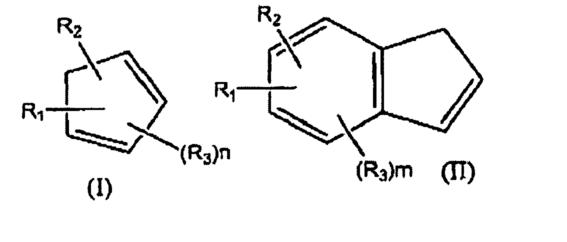 dans lesquelles R¹ et R² sont liés à des atomes de carbone adjacents et sont pris ensemble pour former un groupe -X-SiR'₂-Y-SiR'₂-X- ou -X-SiR'₂-X- ;
les R', qui peuvent être identiques ou différents, sont chacun un groupe hydrocarbyle en C₁ à C₂₀ ;
les X, qui peuvent être identiques ou différents, sont chacun O, S, NH ;
Y est un groupe X ou une liaison ;
les R₃, qui peuvent être identiques ou différents, sont chacun un substituant de cycle ou deux groupes R₃ pris ensemble peuvent former un autre cycle facultativement substitué par un R₃ (par exemple, pour former une structure fluorényle facultativement substituée) ;
m est 0 à 5 ; et
n est 0 à 3 ;
comprenant la réaction d'un composé de formule (I") ou (II") 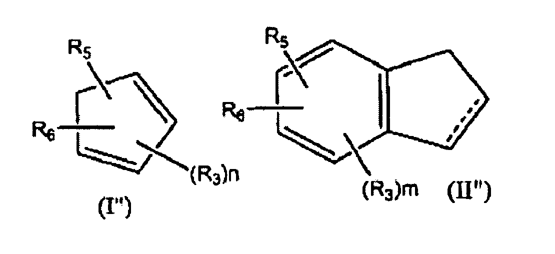 dans lesquelles R₅ et R₆ sont présents sur des atomes de carbone adjacents et représentent des groupes hydrocarbyloxy ; et la ligne en pointillé représente une double liaison facultativement présente ;
avec un composé R'₂SiH₂ ou HR'₂SiSiR'₂H ;
en présence d'un acide de Lewis.

6. Procédé selon la revendication 4 ou 5, dans lequel ledit acide de Lewis contient du bore.

7. Procédé selon les revendications 4 à 6, dans lequel ledit acide de Lewis est B(ArF)₃, où ArF représente un groupe aromatique fluoré.

8. Procédé selon les revendications 4 à 7, dans lequel B(ArF)₃ est B(C₆F₅)₃.

9. Procédé selon la revendication 8, comprenant les étapes indiquées ci-dessous : 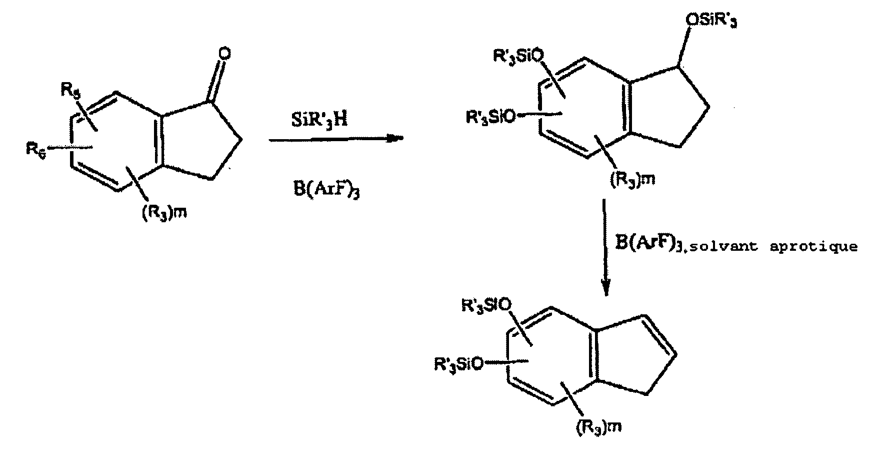 où les R', qui peuvent être identiques ou différents, sont chacun un groupe hydrocarbyle en C₁ à C₂₀ ;
les R₃, qui peuvent être identiques ou différents, sont chacun un substituant de cycle ou deux groupes R₃ pris ensemble peuvent former un autre cycle facultativement substitué par un R₃ ;
m est 0 à 5 ;
R₅ et R₆ sont présents sur des atomes de carbone adjacents et représentent des groupes hydrocarbyloxy.
